# EUROPEAN PATENT SPECIFICATION

(11) **EP 0 437 781 B1**
(45) Date of publication and mention of the grant of the patent: **11.10.1995**
(21) Application number: 90124793.2
(22) Date of filing: 19.12.1990
(51) Int. Cl.: B62D 25/08

(54) **Front body structure of vehicle**
Vorderwagenaufbau eines Fahrzeuges
Structure de la partie avant pour un véhicule

(30) Priority: 21.12.1989 JP 333139/89
(43) Date of publication of application: 24.07.1991
(73) Proprietor: Mazda Motor Corporation, Aki-gun Hiroshima-ken (JP)
(72) Inventor: Kanemitsu, Norihiko, Hiroshima-shi, Hiroshima-ken (JP); Hara, Kazuhiro, Aki-gun, Hiroshima-ken (JP); Yoshii, Noboru, Aki-gun, Hiroshima-ken (JP); Kanba, Youji, Aki-gun, Hiroshima-ken (JP)
(74) Representative: Gauger, Hans-Peter, Dipl.-Ing.

(56) References cited:
- US-A- 2 715 448
- US-A- 4 542 934
- PATENT ABSTRACTS OF JAPAN vol. 12, no. 343 (M-741)(3190) 14 September 1988, & JP-A- 63 103773 (NISSAN) 09 May 1988,
- PATENT ABSTRACTS OF JAPAN vol. 12, no. 352 (M-744)(3199) 21 September 1988, & JP-A-63 110 075 (NISSAN) 14 May 1988
- PATENT ABSTRACTS OF JAPAN vol. 12, no. 343 (M-741) 14 September 1988, & JP-A- 63 103771 (NISSAN) 09 May 1988,

## Description

### BACKGROUND OF THE INVENTION

This invention relates to a front body structure of a vehicle, wherein a nose unit having at least a shroud panel and a shroud upper is mounted to a front part of a vehicle body.

In the conventional art of a vehicle assembling line (main line), since each component to be fitted to a front part of a vehicle body, such as a bumper, a radiator grille, head lamps and a radiator, is fitted at different stations, the number of stations is increased and accordingly, the line becomes longer and more complicated. It also has an operational problem since the operator on a mixed flow line, in which various types of vehicles are assembled, needs to make a decision whether the components should be fitted to the body depending on a vehicle type.

By incorporating several components into one unit, easing the operation on the assembling line and reducing the number of stations can be planned. By this, better precision for fitting components to the unit can also be improved since the whole unit is assembled in a separate line.

Considering the above aspects, JP-A-63 103 771 on which the preamble of claim 1 is based proposes to incorporate components, such as a radiator, head lamps, a bumpers and a radiator grille, to one unit by fitting them to a radiator core support and mount this unit to a front part of a vehicle body.

However, under such a structure, right and left side wall parts of the vehicle body, having a closed sectional construction and extending longitudinally of the vehicle body, are cantilever bridges, and the front part (front end part) of the right and left side walls are free. Consequently, since the rigidity of the front part of the vehicle body is low and easy to deform, determining the position of the nose unit to the front part of the vehicle body is hard. Also, to secure the rigidity for the heavyweight member such as a radiator and a condenser, is required.

### SUMMARY OF THE INVENTION

The object of the present invention is to provide a front body structure of a vehicle, a nose unit is mounted to a front part thereof precisely without lowering the supporting rigidity of a weight member. In order to achieve this object, the vehicle body of the present invention comprises the structure according to the features of claim 1.

Consequently, since the rigidity of the front part of the vehicle body is improved by the cross member and this results in less deformation, the nose unit can be mounted to the vehicle body with better positioning precision. Furthermore, the supporting rigidity of the radiator mounted to the vehicle body is secured since the support member for supporting the heavyweight member such as a radiator on the nose unit side is supported by the cross member.

In this invention, while the vehicle body further comprises a front fender and a wheel apron reinforcement, the unit base further comprises a shroud upper connected to upper end portion of the shroud panel and extending in the widthwise direction of the vehicle body. Both ends of the shroud upper are clamped to the front fender and the wheel apron reinforcement of the vehicle body so as to secure the mounting strength of the nose unit to the vehicle body.

The unit base can further comprise two vertical members hanging down from a shroud upper, the support member extending in the widthwise direction of the vehicle body being provided between the lower end portions of such vertical members. In this case, for example, the support member, having a approximately L-shaped section, comprises an upper wall part for supporting lower parts of a radiator and a condenser and a vertical wall part extending downwardly from the front end of the upper wall part. In order to raise the supporting rigidity, the upper wall part and the vertical wall part of the support member are clamped to the cross member by bolts, and the upper part of the heavyweight member is supported by the shroud upper through brackets.

Also, the support member can be not only one member extending in the widthwise direction of the vehicle body but two members, first and the second support members, connected to the lower end portion of the shroud panel. In this example, the first and the second support members comprise an upper wall part for supporting the lower part of the radiator which is a heavyweight member, a vertical wall part extending downwardly from the front end of the upper wall part, and a support member for supporting a cooler condenser, a heavyweight member, projecting to the front from the lower end of the vertical wall.

The shroud panel may have a mounting portion for temporarily mounting a bumper in order to incorporates components into a unit.

It will be understood that the radiator grille and the lamp unit can be installed on the vehicle body either as a part of the unit or after the support member has been fixed to the cross member.

The above and other objects, features, and advantages of the present invention will be more apparent with the description of the prefered embodiment by reference to the accompanying drawings.

### BRIEF DESCRIPTION OF THE DRAWINGS

The accompanying drawings show a preferred embodiment of the present invention.
Fig.1 is a perspective diagram of a front part of a vehicle;
Fig.2 is a perspective diagram of a front part of a vehicle body;
Fig.3 is a perspective diagram of a nose unit;
Fig.4 is a exploded perspective view of a nose unit;
Fig.5 is a diagram illustrating a mounting of a support member;
Fig.6 is a sectional view taken on line VI-VI of Fig.5.

Figs.7-13 show the second embodiment, in which

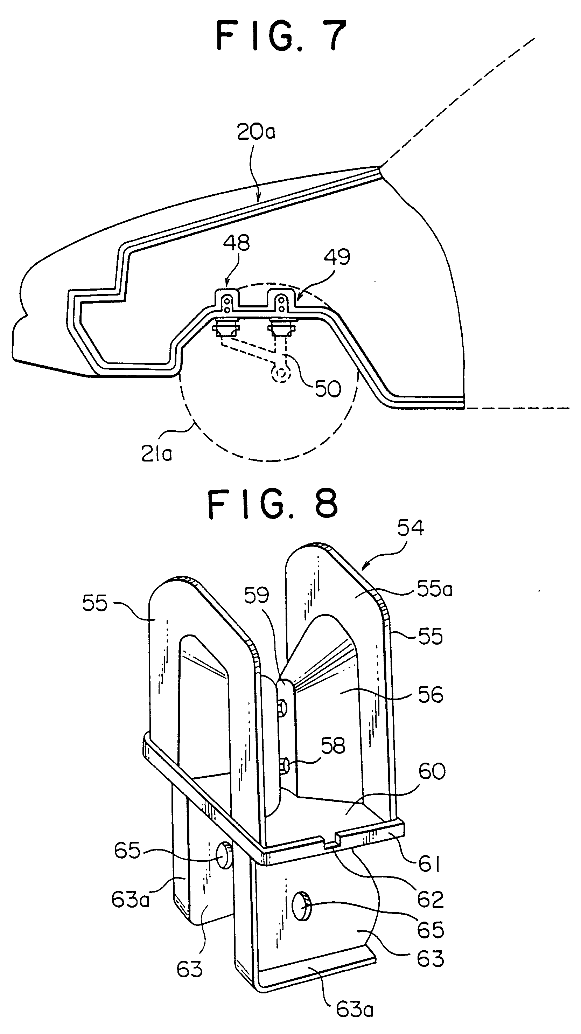

Fig.7 is a diagram illustrating a relationship of a unit base and a jig for mounting a nose unit;
Fig.8 is a exploded perspective view of a nose unit;

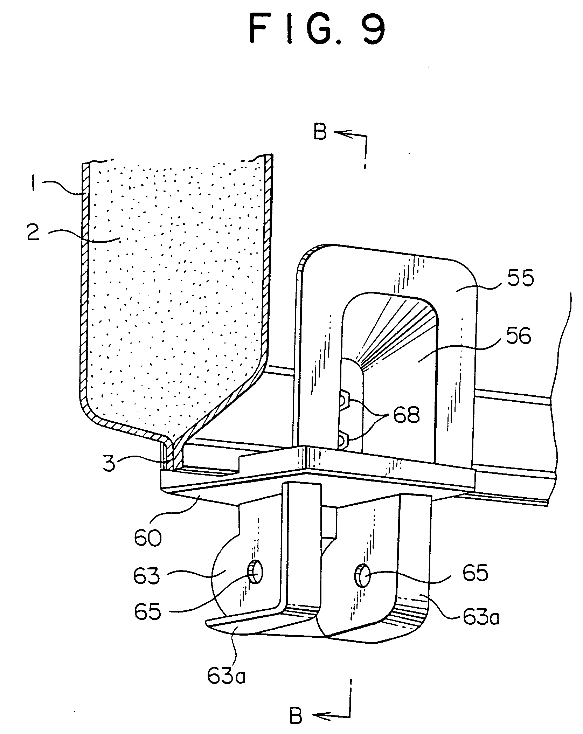

Fig.9 is a diagram illustrating mounting of a nose unit to a front part of a vehicle body;

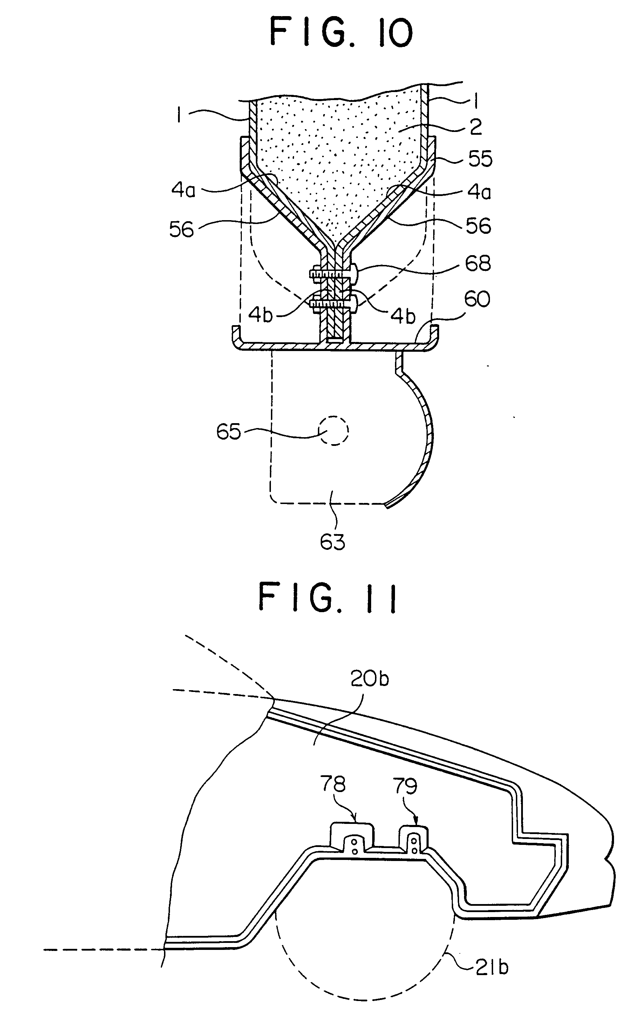

Fig.10 is a diagram illustrating a front part of a vehicle body after a nose unit is mounted thereon; and

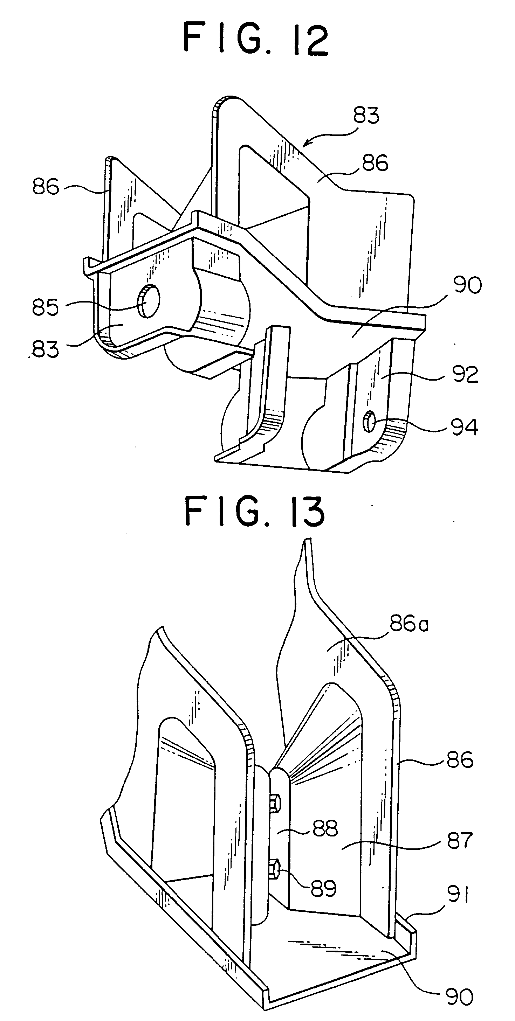

Figs.11-13 are sectional views taken on lines X-X, Y-Y, Z-Z of Fig.10 respectively.

### DESCRIPTION OF THE PREFERRED EMBODIMENT

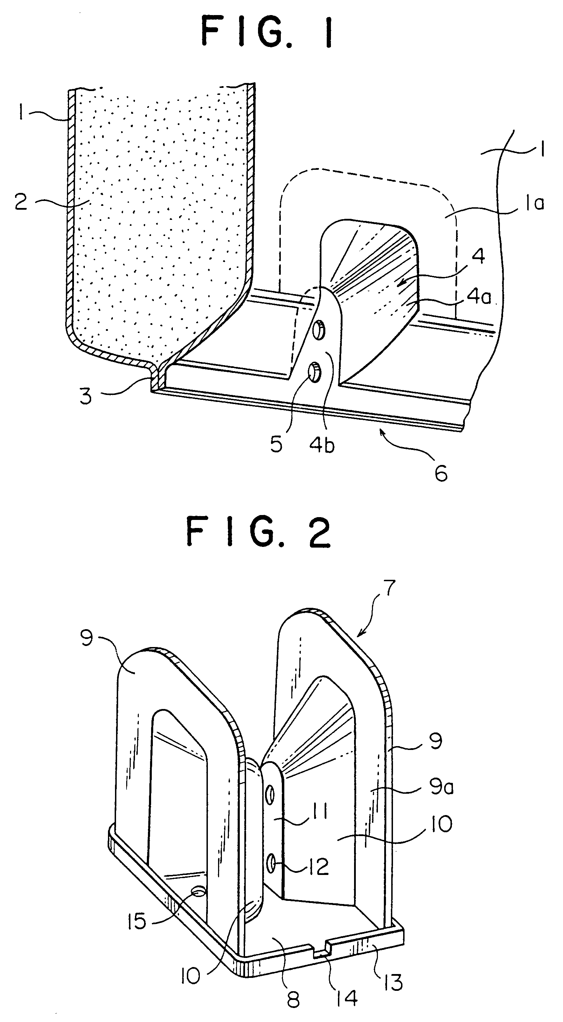

In Fig.1 illustrating a front part of a vehicle, reference numeral 1 designates a vehicle, a nose unit 3 is mounted on the front part of the vehicle body 2. Front fenders 4 are provided on both sides of the body 2, and a bonnet 5 is provided on the front top of the vehicle body 2.

In the vehicle body 2, as shown in detail in Fig.2, front sideframes 13 are connected to lower parts of wheel aprons 12 forming right and left side walls of an engine room 11, and wheel apron reinforcements 14 are connected to upper parts of the wheel aprons 12 so that both top and bottom closed sectional constructions extending longitudinally of the vehicle body are formed.

A coss member 15 extending in the widthwise direction of the vehicle body is installed between the front sideframes 13. By this structure, both right and left ends of the cross member 15 are fixed to the underside of the right and left front sideframes 13. An upper member 16, comprising a front wall part 16A positioned on the front side and extending vertically and a top wall part 16B extending rearwardly from the upper end of the front wall part 16A, is connected to a lower member 17 on an underside of the upper member 16 so that the above cross member 15 forms a closed sectional construction extending in the widthwise direction of the vehicle body.

Also, front end panels 18 are connected to the front end portion of the wheel aprons 12, wheel apron reinforcements 14, and the front sideframes 13.

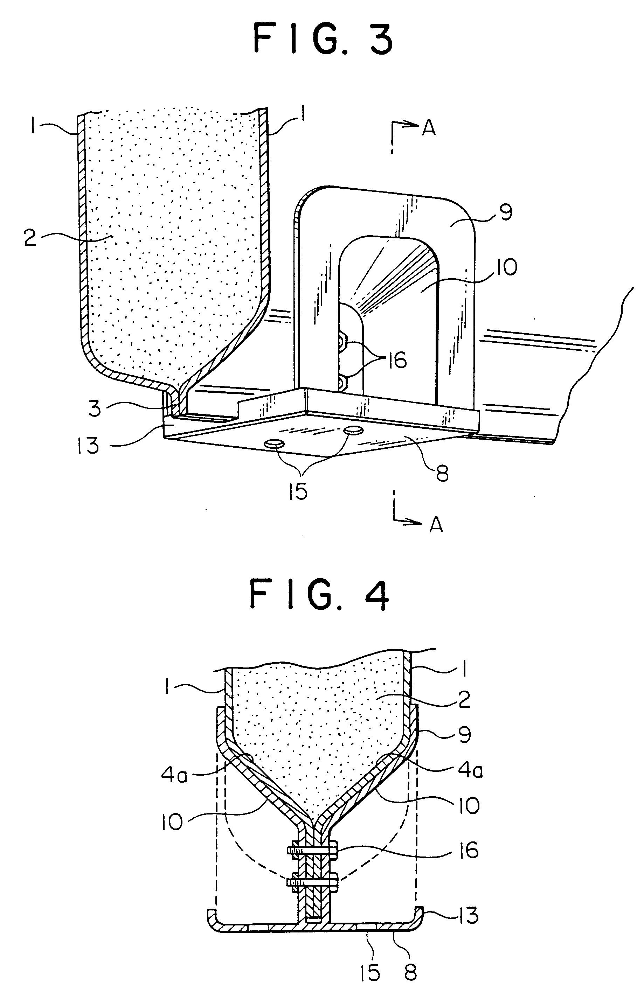

The nose unit 3, as illustrated in detail in Figs.3 and 4, is connected to shroud panels 21 and a shroud upper 22 extending in the widthwise direction of the vehicle body on the upper end portion of the shroud panels 21. This shroud upper 22 comprises a vertical wall part 22A extending vertically, an upper wall part 22B extending rearwardly from the upper end of the vertical wall part 22A, and a rear wall part 22C extending downwardly from the rear end of the upper wall part 22B. A pair of vertical members 23 are hanging down from a center part in the widthwise direction of the upper wall part 22B.

At both right and left lower end parts, a support member 26 extending in the widthwise direction of the vehicle body and having approximate L-shaped section is provided. A support member 26 comprises an upper wall part 26A for supporting a condenser 24A and a lower part of a radiator 24B both of which are weight members 24, and a vertical wall part 26B extending downwardly from the front end of the upper wall part 26A. A condenser 24A and a radiator 24B are connected integrally by a member not shown in the drawings, the lower end portions thereof being supported by mounting portions 26a on the upper wall part 26A of the support member 26 through rubber mount members 27, the upper end portions thereof being clamped to an upper wall part 22B (fitting holes 22A) of the shroud upper 22 by bolts through brackets 28.

Mounting portions 23a are formed around the lower end portion of the vertical members 23, two bolts 33 from four-in-a-set bolts, which are provided to a bumper reinforcement 32 that a bumper 31 is mounted to, are fastened to a front end flange part 13a of the front sideframe 13 through the mounting portions 23a. Two other bolts 34 are fastened to a mounting flange part 12a of the wheel apron 12 through the front end panel 18, passing through a lower side cut out part 21a of the shroud panel 21.

The both ends of the bumper 31 are also connected to a mounting portion 4a of the front fender 4 of the vehicle body 2 by bolts 35 provided on the bumper 31 and bolts (not shown) passing through a fitting hole 31a of bumper 31.

Both ends 22b of the upper wall parts 22B of the shroud upper 22 are clamped to both a mounting portion 4b of the top of the front fender 4 and a wheel apron reinforcement 14 by bolts 36.

Thus, the support member 26 is supported on the cross member 15 (upper member 16) wherein the nose unit 3 is mounted to the vehicle body 2 and connected to a front wall part 16A and an upper wall part 16B of the upper member 16 of the cross member 15 by tightening bolts 41 through five fitting holes 26b of an upper wall part 26A of the support member 26 and the front wall part 26B. On the upper member, five nuts 42 are welded corresponding to the fitting holes 26b of the support member 26.

Reference numeral 51 designates an intercooler, an upper part thereof being clamped to the vertical wall part 22A of the shroud upper 22 by bolts 53 through brackets 52. The lower end portion of the intercooler 51 is supported by brackets projecting from the bumper reinforcement 32 (not shown in drawings).

Reference numeral 54 designates a radiator grille positioned at a front center part of the vehicle, having both right and left mounting portions 54a fitted into fitting holes of the vertical wall parts 22A of the shroud upper 22 and a mounting portion 54b at center fitted into fitting holes of a vertical member 56 of bonnet lock means 55. Bonnet lock means 55 is connected to a vertical wall part 22A of the shroud upper 22 by tightening bolts 57.

Reference numerals 61A, 61B are right and left lamp units, mounting portions 61a on the upper end of each unit being clamped to the vertical wall part 22A of the shroud upper 22 by bolts 62, and a mounting portion 61b on the lower end of each unit being connected to the shroud panel 21 by bolts 63 (only bolts 62, 63 and 61b for the lamp unit 61A are illustrated in the drawing). Reference numerals 64, 65 are harness for connecting a electric system and are clamped to the support member 26 by bolts 67 into a mounting portion 66 and fitted into a fitting hole of the upper wall part 22B of the shroud upper 22 through mounting portions 68, respectively. Reference numerals 71 designate shock absorber members for the shock at opening/closing the bonnet 5 and connected to an upper wall part 22B of the shroud upper 22.

For assembling a front vehicle body, nose unit 3 is built first other than the vehicle body 2 on which the cross member 15 is interposed between the right and left side frames 13. In other words, the unit base 6 having the shroud panel 21, the shroud upper 22, the vertical members 23, and the support member 26 is formed by providing the support member 26 between the lower end portion of the vertical members 23. First, the lower part of a heavyweight member 24 (the condenser 24A and the radiator 24B) are both supported by and fixed to the support member 26 and the upper end portion of the heavyweight member is supported on the shroud upper 22 through brackets 28. Then the components are mounted so as to construct the nose unit 3.

Thus constructed nose unit 3 is inserted to the vehicle body 2 from the front, and fixed in such a fashion that the support member 26 is positioned on the cross member 15 (the upper member 16). Since the rigidity of the front part of the vehicle body 2 is improved by the cross member 15, better positioning precision can be obtained.

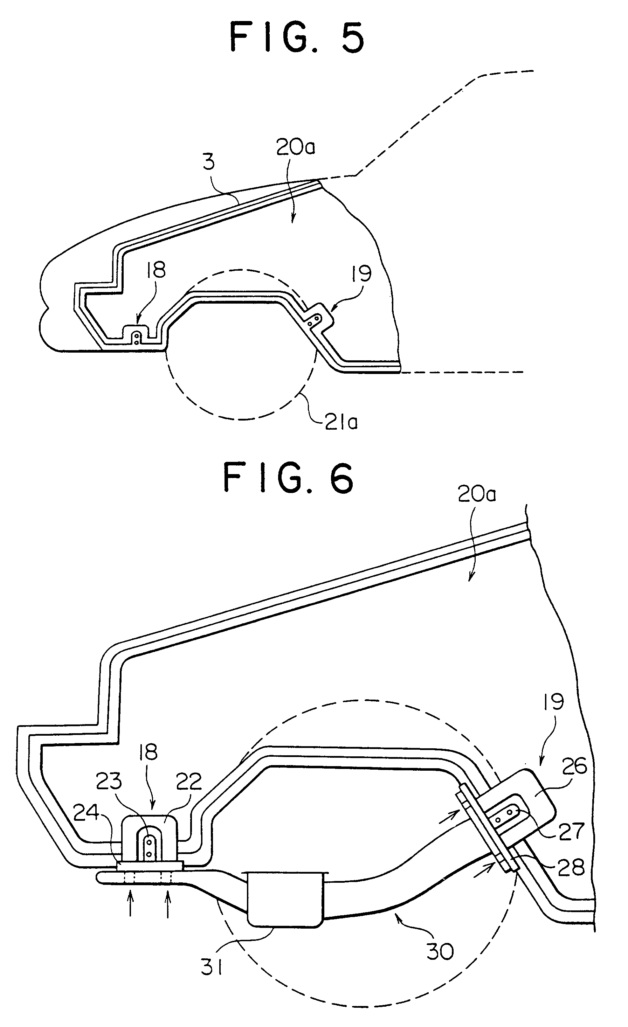

Under this condition, the support member 26 is supported on the cross member 15, an implement is inserted through the space between the bumper reinforcement 32 (the bumper 31) and the cross member 15 (the support member 26), the support member 26 is clamped to the cross member 15 (nuts 42 of the upper member 16) by five bolts 41. By this structure, the support member 26 for supporting the lower part of the heavyweight member 24 having the condenser 24A and the radiator 24B is supported by the cross member 15 and clamped to the front part of a vehicle by bolts 41 and nuts 42 (refer to Fig.6). This results in securing the supporting rigidity of the condenser 24A and the radiator 24B.

In the above embodiment, the bumper 31 and the bumper reinforcement 32 forms a part of the nose unit by being temporarily supported by the shroud panel 21 through brackets (not shown in the drawing). However, the bumper 31 can be excluded from the nose unit 3 and can instead be mounted later to the front part of a vehicle.

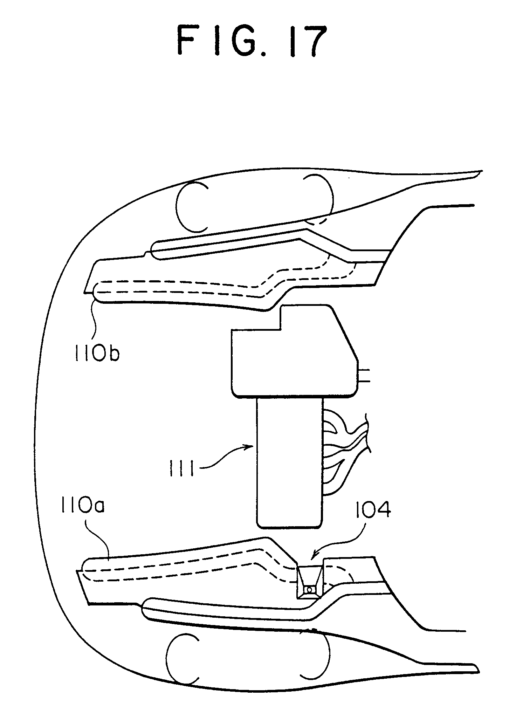

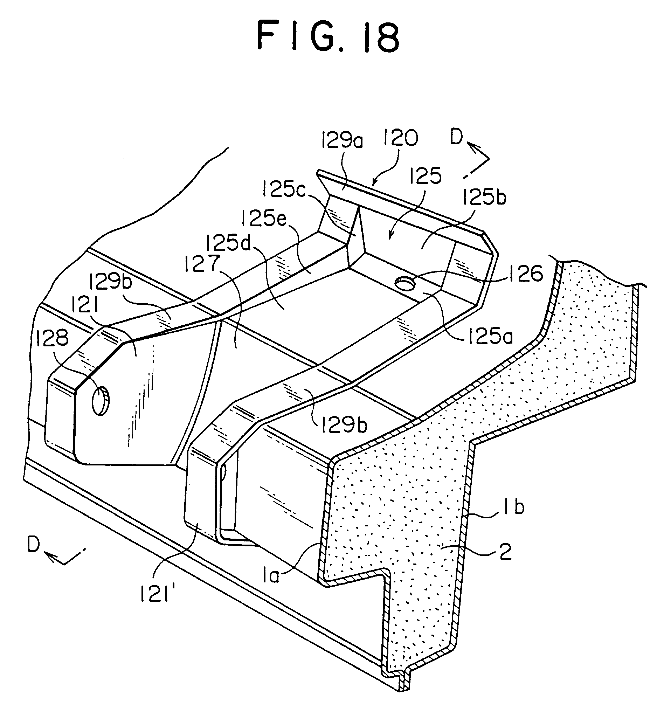

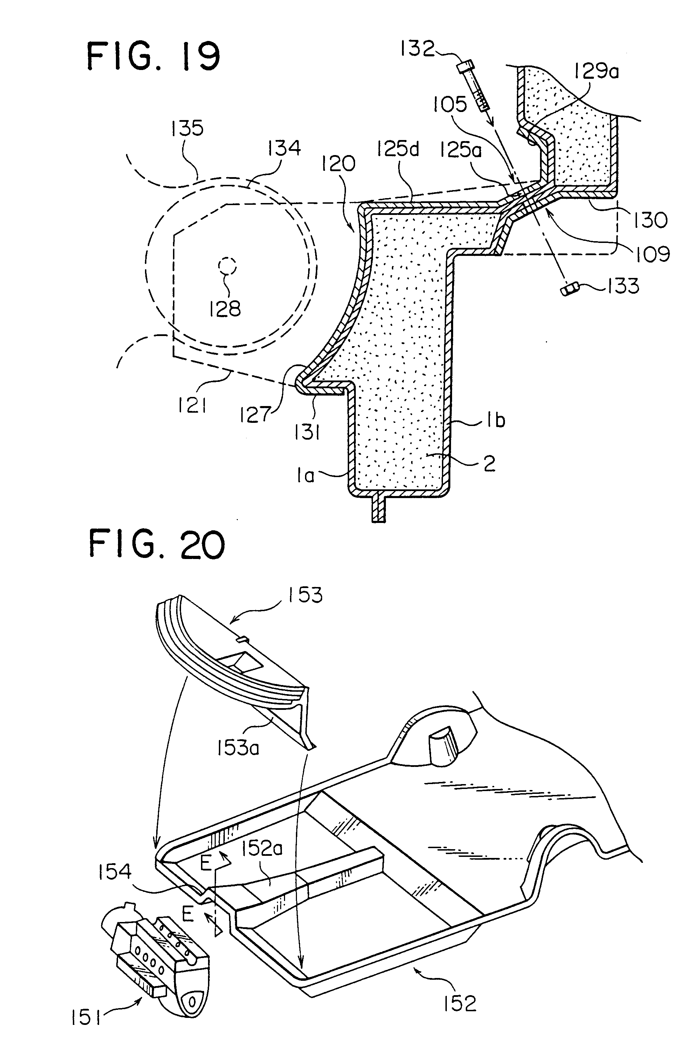

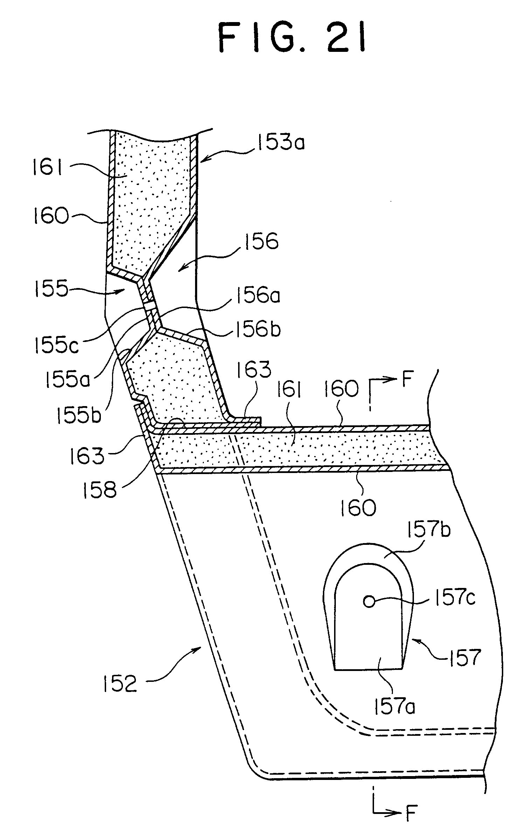

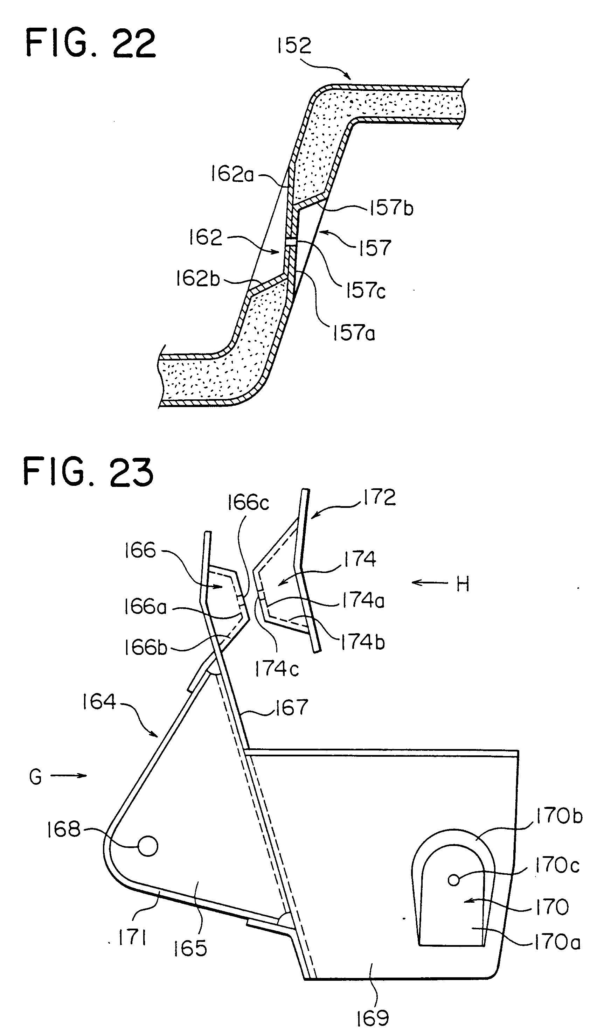

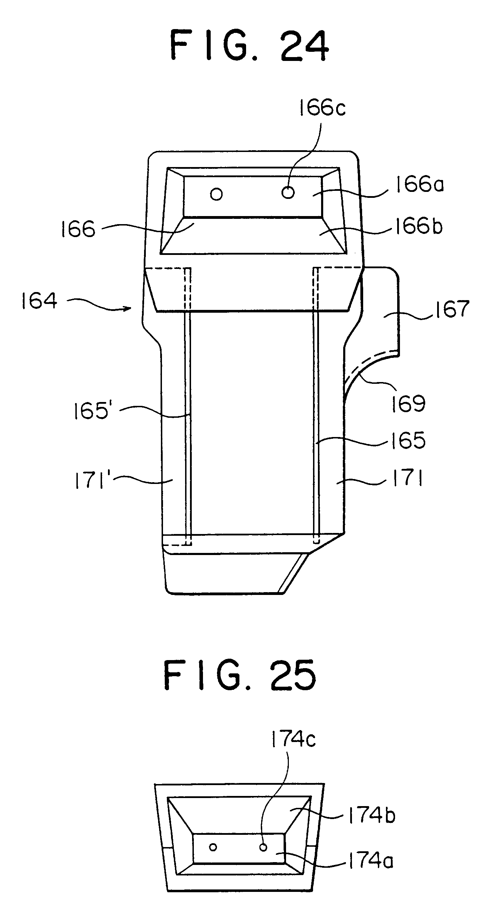

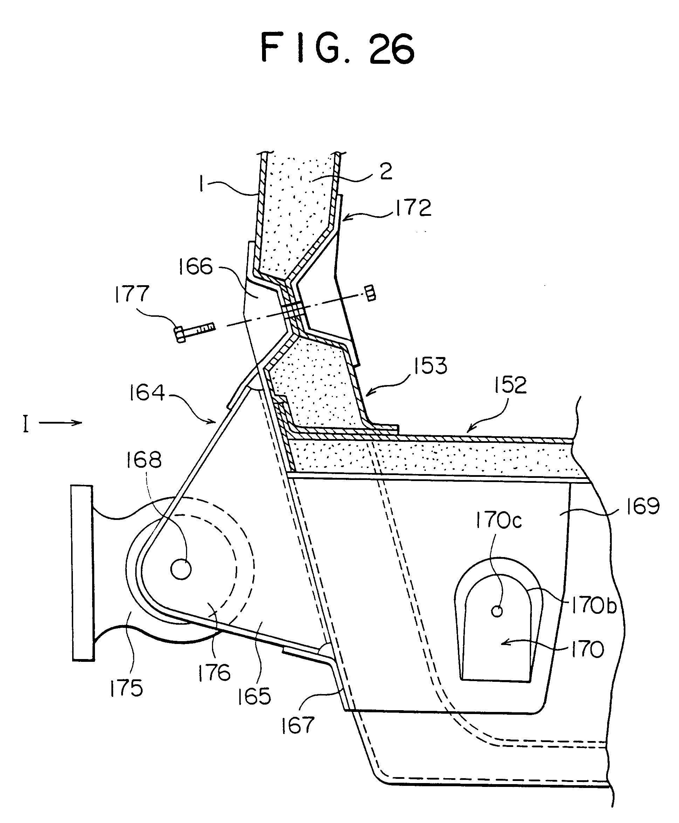

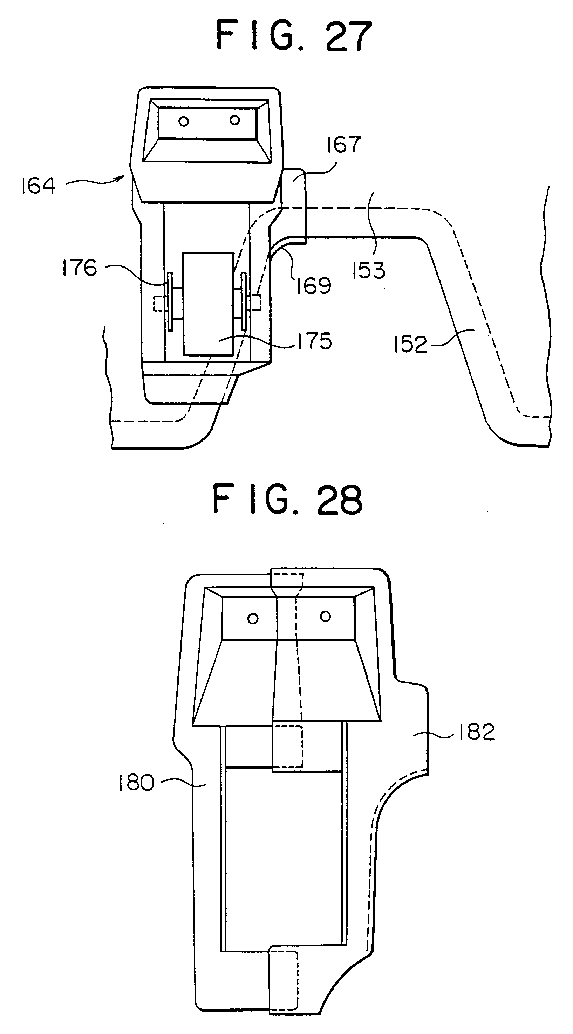

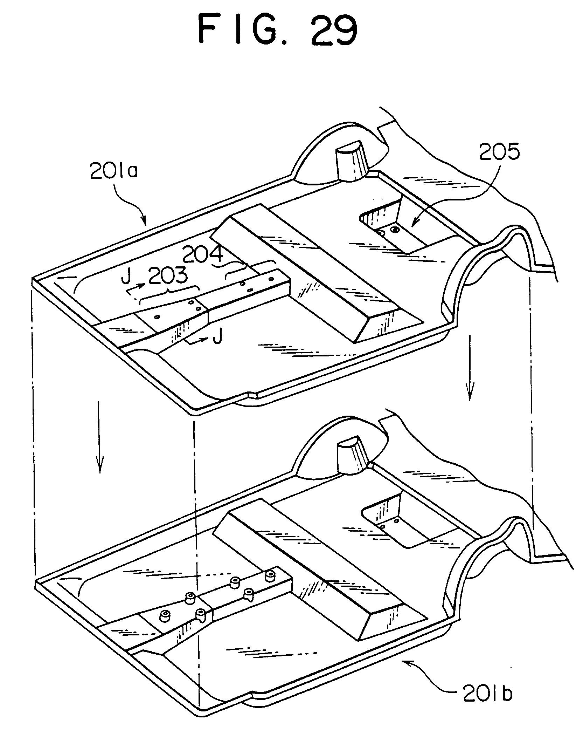

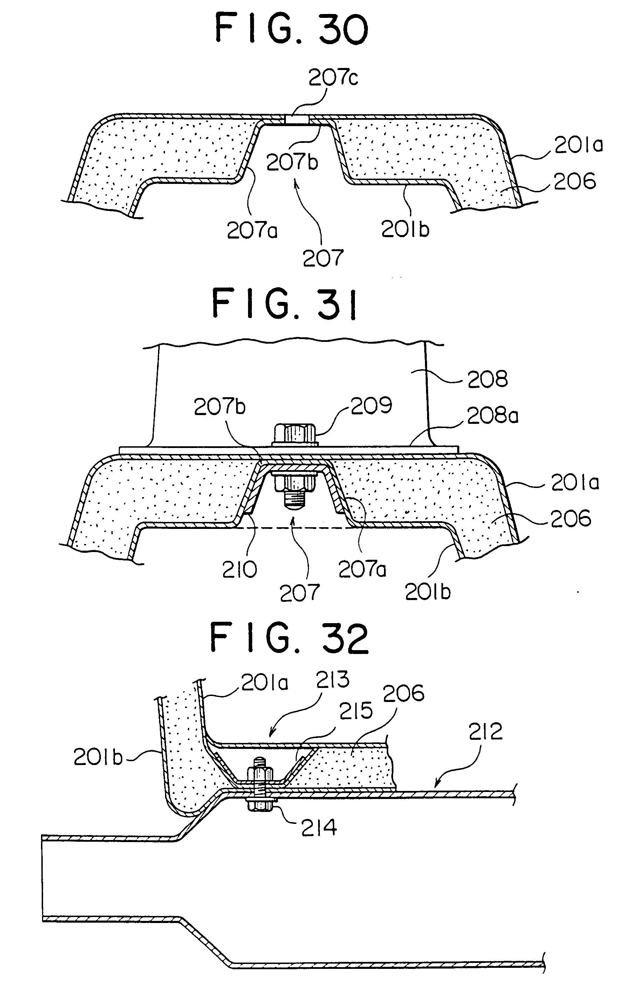

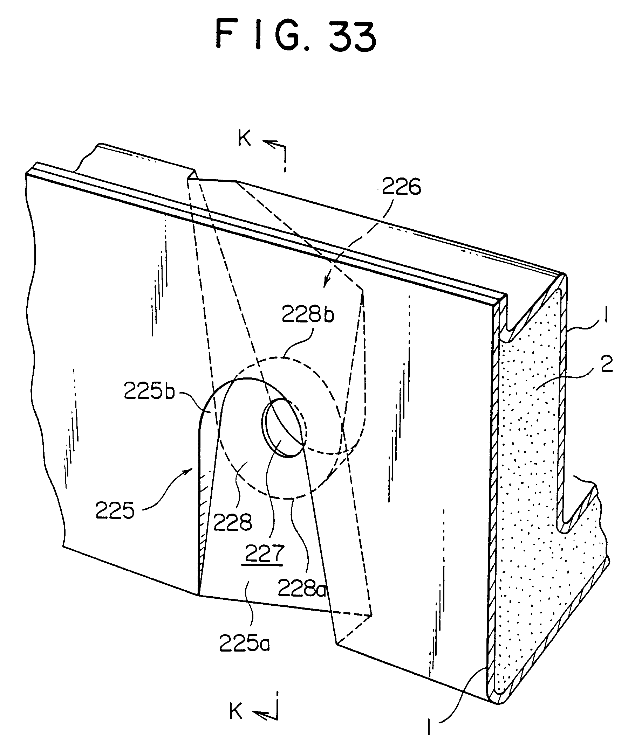

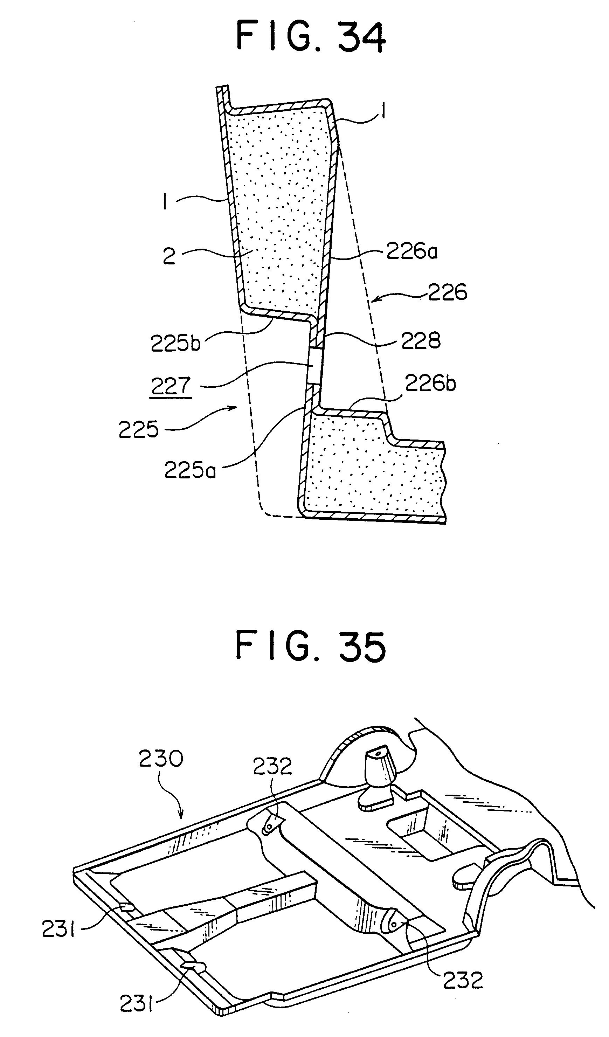

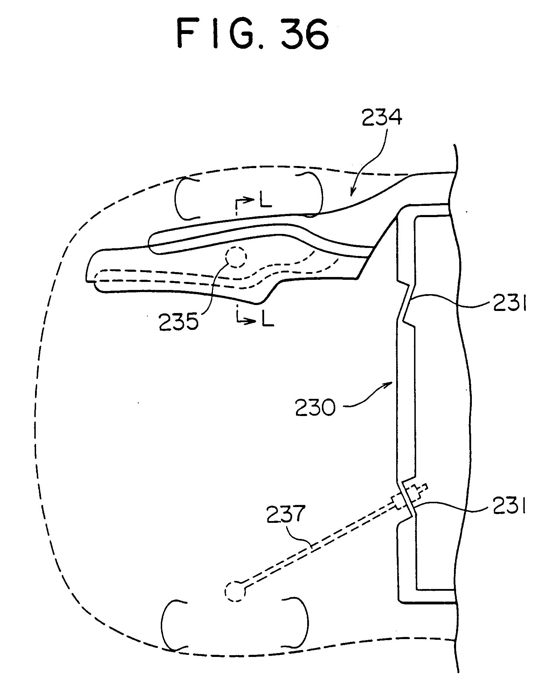

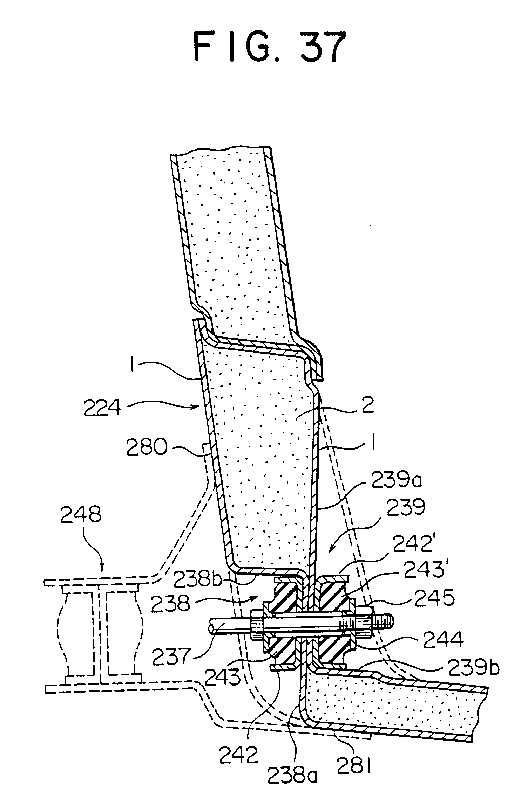

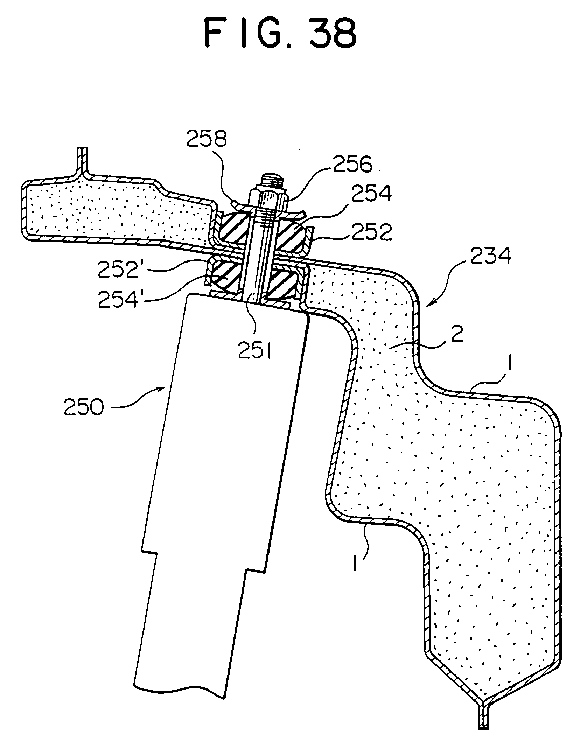

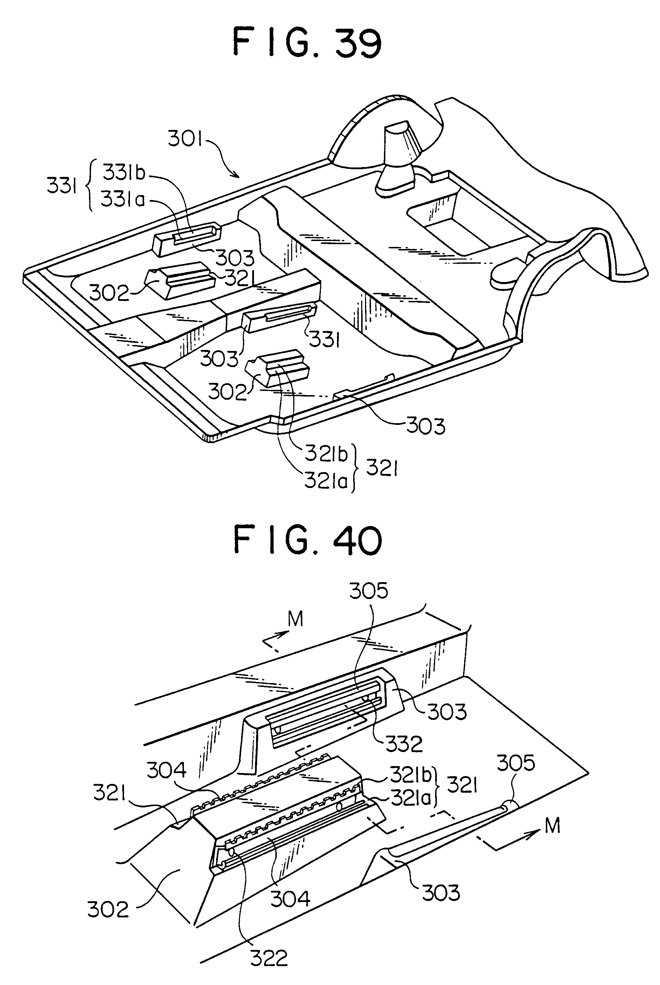

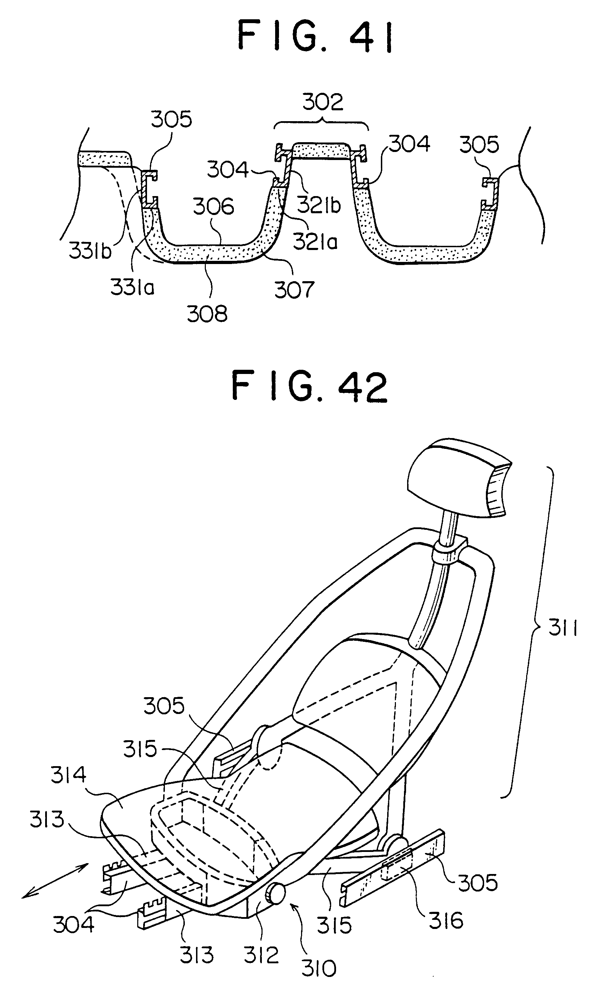

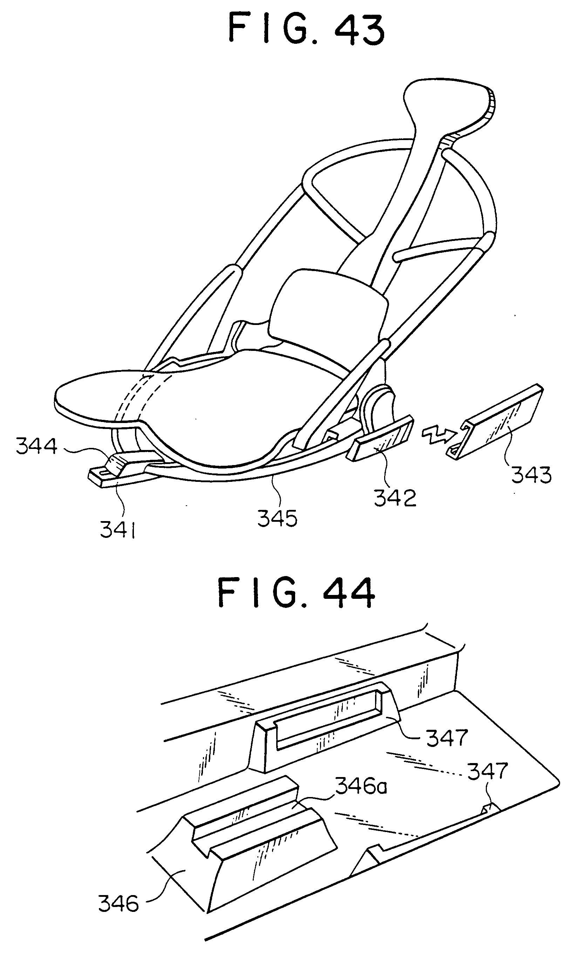

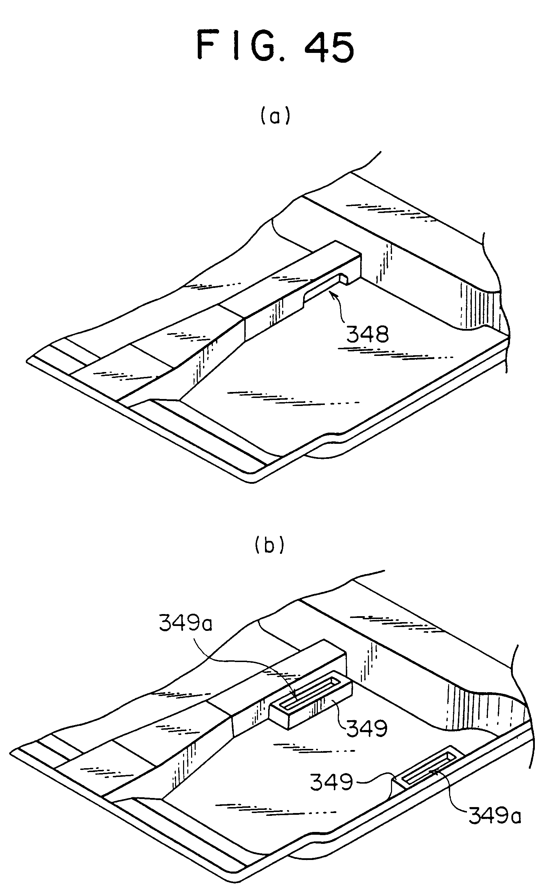

The support member 26 for supporting the heavyweight member such as a radiator comprises one member extending in the widthwise direction of the vehicle body, however, it can also comprise two support members 128 being separated with a fixed distance in the widthwise direction as shown in the following second embodiment (Figs.17-13).

As shown in Figs.7 and 8, each component is fitted to a nose unit 121 wherein a unit base 123 is put on a jig 122 for mounting the nose unit.

The jig 122 for mounting the nose unit comprises a base part 122a extending in the widthwise direction of the vehicle body, vertical arm parts 122b, 122c extending upwardly from the both ends of the base part 122a, and arm parts 122d, 122e extending to the inboard from the upper ends of the arm parts 122d, 122e. On the base part 122a, three engaging pins 124A, 124B, 124C are provided upwardly projecting, but moving in the vertical direction, and on the arm parts 122d, 122e, two engaging pins 124D, 124E are provided downwardly projecting, but moving in the vertical direction. The engaging pins 124A-124E move vertically by cylinders (only cylinders 181D, 181E for the engaging pins 124D, 124E are shown in the drawing).

The unit base 123 basically comprises right and left shroud panels 125, a shroud upper 126 extending in the widthwise direction of the vehicle body and fixed to the upper end of the shroud panels 125, a center steer 127 hanging down from the mid-position of the shroud upper 126 in the widthwise direction of the vehicle body, and first and second support members 128 each fixed to the lower end portion of each shroud panel 125.

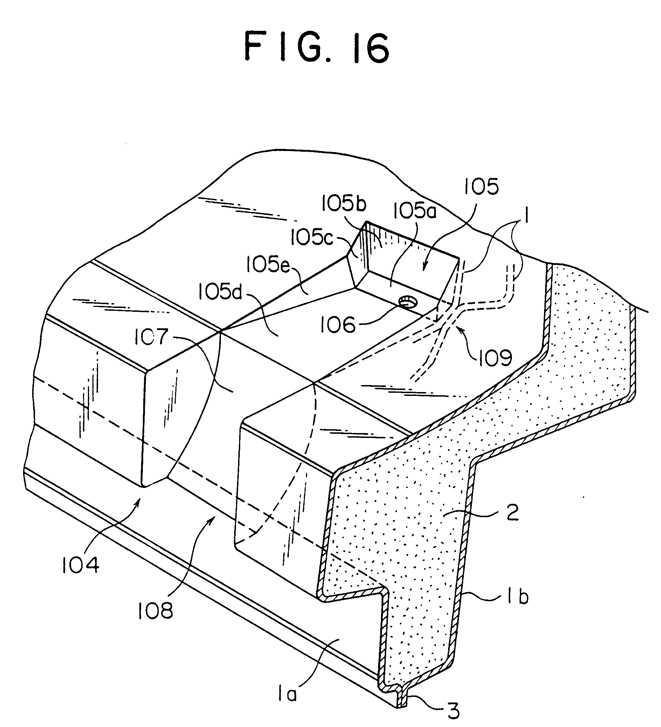

In detail, the shroud upper 126 comprises a vertical wall part 126A extending vertically, an upper wall part 126B extending rearwardly from the upper end of the vertical wall part 126A, and a rear wall part 126C extending downwardly from the rear end of the upper wall part 126B (refer to Fig.13). The center steer 127 extending in the vertical direction of the vehicle body is hanging down from the mid-portion of the vertical wall part A in the widthwise direction of the vehicle body.

Each support member 128 comprises an upper wall part 128a for supporting a lower part of a radiator 129 which is a heavyweight member, a vertical wall part 128b extending downwardly from the front end of the upper wall part 128a and contacting the shroud panel 125, and a support part 128c for supporting a cooler condenser 130 which is another heavyweight member and projects to the front from the lower end of the vertical wall part 128b.

On both ends of the shroud upper 126 (the vertical wall part 126B) of the unit base 123, on the lower end of the center steer 127, and on the front end of the support members 128, an engaging part comprising fitting holes 126a, 126b, 127a, 128d, 128d for detacheably connection with the engaging pins 124D, 124E, 124B, 124A, 124C is formed. The position of the nose unit 121 is determined by the relationship between the engaging pins 124D, 124E, 124B, 124A, 124C and the fitting holes 126a, 126b, 127a, 128d, 128d.

A lower end portion of the radiator 129 and the cooler condensor 130 is supported by upper wall parts 128a of the support members 128 (fitting holes 128e) and support parts 128c (fitting holes) through rubber mounts 131A, 131B. The upper end portion of the radiator 129 and the cooler condenser 130 are clamped to the upper wall part 126B of the shroud upper 126 reinforced by a radiator reinforcement 133 (refer to Fig.11) and a vertical wall part 126A by bolts 134A, 134B through brackets 132A, 132B respectively. In Fig.11, reference numeral 157 designates a nut screwed on the bolt 134A which is already welded on the under side of an upper wall part 126B of the shroud upper 126 through the radiator reinforcement 133.

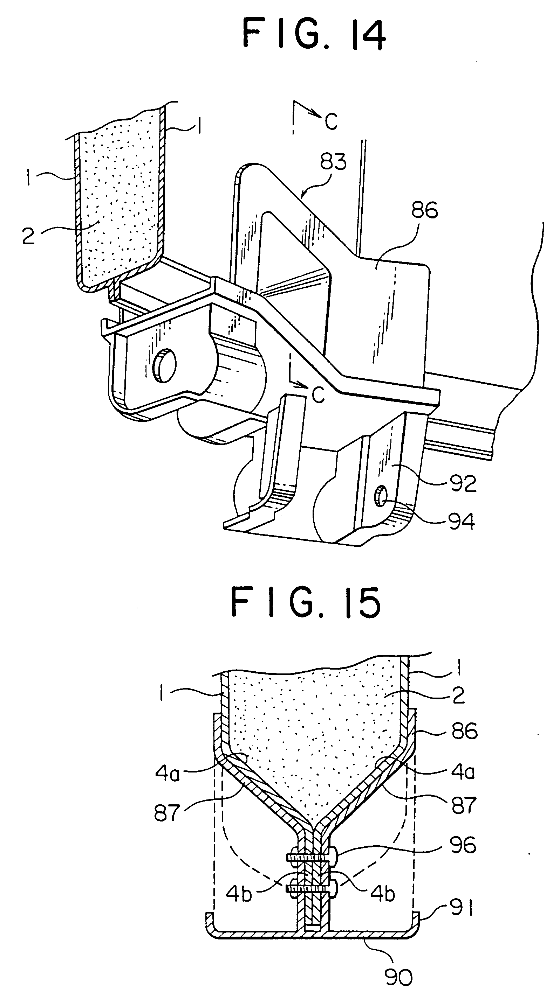

Mounting portions 125a are formed around the lower end portion of the shroud panels 125 so that two inner bolts 137A out of four-in-a-set bolts are disposed on the bumper reinforcement 136 on which a bumper face 135 is mounted and are fixed to the mounting portions 125a as a temporarily mounting for forming a unit by using a nut 142. The other outer two bolts 137B are fixed to a front flange part 139a of a frame outer 139A of a front frame 139 through side part 138a of a cross member 138 when mounting a nose unit 121 to a front part of a vehicle so that the bumper reinforcement 136 is connected directly to the vehicle body 2 (Fig.12).

Both ends of the upper wall part 126B of the shroud upper 126 are clamped to a shroud bracket 141 by bolts 140. As shown in Fig.11, a base part of this shroud bracket 141 is clamped between the wheel apron reinforcement 14 and the front fender 4 by a bolt 143 and a nut 144.

Accordingly, the support member 128 is supported on the cross member 138 wherein the nose unit 121 is installed on the front part of the vehicle body 2 and fixed to a front wall part and an upper wall part of an upper member 138A of the cross member 138 by bolts 147, 148 and nuts 145, 146 through seven fitting holes of an upper wall part 128a and a front wall part 128b of the support member 128 (Fig.13).

Reference numeral 151 designates a cooler receiver, the side part thereof being clamped to the center steer 127 by bolts 153 through a bracket 152. A joint metal fitting 155 of a horse member 154 from a cooler receiver 151 is connected to a joint metal fitting of a horse member 155A of the cooler condenser 130.

Reference numeral 161 designates bonnet lock means clamped to a vertical wall part 126A of the shroud upper 126 by bolts 162 through the center steer 127.

Reference numeral 163 designates a power steering pipe clamped to a center steer 127 and one of the shroud panels 125 through a mounting implement 164 and bolts 165. Reference numerals 166 designate horn members fixed to the center steer 127 by a bolt 167.

Right and left lump units 172 comprising a radiator grille 171, a head lamp 172A, and a front combination lamp 172B, those positioned at a front center part of the vehicle, are mounted to the nose unit and the vehicle body after the nose unit 121 has been mounted to the vehicle body as shown in Fig. 10, this step differs from the first embodiment. In detail, the radiator grille 171 comprises engaging parts 171a, 171b, 171c, having right and left side engaging parts 171a, 171c connected detacheably to a vertical wall part 126A (fitting in a fitting hole) of the shroud upper 126 and a center engaging part 171b connected detacheably to a vertical wall part 126A (fitting in a fitting hole) of the shroud upper 126 through bonnet lock means 161. In a lump unit 172, mounting portions 172a, 172b on the head lamp 172A side are fixed to a side end portion of the shroud panel 125 and an upper wall part 126B (a fitting hole) of the shroud upper 126 by bolts 182, 183, respectively, and an engaging portion 172c on the front combination lamp 172B side is fitted in to an engaging portion 184 of the wheel apron.

According to the above structure, each component is mounted to the base wherein the unit base 123 is supported by the jig 122 for mounting the nose unit and positioned by the relationship between the engaging pins 124A-124E and the fitting holes 126a, 126b 127a, 128d, 128d (refer to Fig.8).

After fitting components to the nose unit, as shown in Fig.9, the nose unit 121 is put on a truck 173 with the jig 122 and mounted to the front part of the vehicle body 2 moving on an assembling line S (a main line). In order to lessen the deformation of the vehicle body 2 (so to speak a front opening), although engaging projecting parts 174a of a deformation preventing jig 174 for preventing the deformation is detacheably engaged with engaging portions 2A of both right and left sides of the vehicle body 2, engaging portions 2A and the deformation preventing tool 174 can be excluded since the cross member 138 has an effect for preventing a deformation of the front part of a vehicle.

Thus, the center steer 127 and the support member 128 are clamped to the cross member 138 by screwing a nut 146 on the bolt 147 through fasteners 175, 176 by using a bolt 148 and a nut 145.

Also, the bumper reinforcement 136 is fixed to a side part 138a of the cross member 138 by screwing a nut 149 on a bolt 137B by a fastener 177. Moreover, the shroud upper 126 is fixed to the shroud bracket 141 by screwing nuts 150 on bolts 140 by a fastener 178.

The radiator grille 171 and the lump unit 172 are installed after the nose unit 121 has been mounted to the front part of the vehicle body 2 (Fig.10).

## Claims

1. A front body structure of a vehicle including a nose unit (3; 121) having at least one heavyweight member (24, 24A, 24B; 129) and a unit base (6; 123) comprising a shroud upper (22; 126) extending widthwise of said vehicle and fixed to right and left front side frames (13; 139) which are connected to adjacent wheel aprons (12) having wheel apron reinforcements (14) at upper parts thereof for forming a closed sectional construction, said shroud upper (22; 126) being connected to an upper end portion of a shroud panel (21; 125) with its both end portions fixed to said wheel apron reinforcements (14), and a support member (26; 128) being part of said nose unit (3; 121) for supporting said at least one heavywheight member (24, 24A, 25B; 129) on said nose unit, said support member extending widthwise of said vehicle between lower end portions (23a) of said shroud panel (21; 125),
characterized in that said support member (26; 128) is attached to and mounted in part on an upper or top surface of a cross member (15; 138) extending widthwise of said vehicle and being mounted on said right and left front side frames (13; 139).

2. A front body structure as claimed in claim 1, wherein said support member (26) is L-shaped and comprises an upper wall part (26A) for supporting said heavyweight member (24, 24A, 24B) and a vertical wall part (26B) extending downwardly from a front end of said upper wall part (26A).

3. A front body structure as claimed in claim 1 or claim 2, wherein said upper wall part (26A) and said vertical wall part (26B) of the support member (26) are fixed to said cross member (15) by tightening bolts (41).

4. A front body structure as claimed in any of claims 1 to 3, wherein an upper part of said heavyweight member (24, 24A, 24B) is supported on said shroud upper (22) through brackets (28).

5. A front body as claimed in claim 1, wherein first and second support members (128) are provided and connected to lower end portions of said shroud panel (125).

6. A front body structure as claimed in claim 5, wherein said first and second support members (128) comprise each an upper wall part (128a) for supporting a lower part of said heavyweight member (129), a vertical wall part (128b) extending downwardly from a front end of said upper wall part (128a) and connected to an adjacent shroud panel (125), and a support part (128c) projecting frontwardly from a lower end of said vertical wall part (128b) and supporting a second heavyweight member (130).

7. A front body structure as claimed in any of claims 1 to 6, wherein said shroud panel (125) comprises a mounting portion (125a) for temporarily mounting a bumper (135) of the vehicle body (2).

## Patentansprüche

1. Vordere Karosseriestruktur eines Fahrzeuges, welche eine vordere Einheit (3; 121) mit wenigstens einem Schwergewichtkörper (24, 24A, 24B; 129) und einer Einheitsbasis (6; 123) einschließt, bestehend aus einem Trägeroberteil (22; 126), der in der Breite des Fahrzeuges verläuft und an rechten und linken vorderen Seitenrahmen (13; 139) befestigt ist, die mit benachbarten Radschürzen (12) verbunden sind, welche Radschürze-Verstärkungen (14) an ihren oberen Teilen haben zur Ausbildung einer geschlossenen Querschnittskonstruktion, wobei der Trägeroberteil (22; 126) mit einem oberen Endteil eines Querträgers (21; 125) verbunden ist, wobei seine beiden Endteile an den Radschürze-Verstärkungen (14) befestigt sind, sowie einem Stützkörper (26; 128), der ein Teil der vorderen Einheit (3; 121) ist zum Abstützen des wenigstens einen Schwergewichtkörpers (24, 24A, 25B; 129) an der vorderen Einheit, wobei der Stützkörper über die Breite des Fahrzeuges zwischen den unteren Endteilen (23a) des Querträgers (21; 125) verläuft,
dadurch gekennzeichnet, daß der Stützkörper (26; 128) an einer oberen oder Oberseitenfläche eines Querträgers (15; 138) befestigt und daran teilweise montiert ist, welcher in der Breite des Fahrzeuges verläuft und an den rechten und linken vorderen Seitenrahmen (13; 139) montiert ist.

2. Vordere Karossiestruktur nach Anspruch 1, bei welcher der Stützkörper (26) L-förmig ist und einen oberen Wandteil (26A) zum Tragen des Schwergewichtkörpers (24, 24A, 24B) und einen vertikalen Wandteil (26B) aufweist, der von einem vorderen Ende des oberen Wandteils (26A) nach unten verläuft.

3. Vordere Karosseriestruktur nach Anspruch 1 oder Anspruch 2, bei welcher der obere Wandteil (26A) und der vertikale Wandteil (26B) des Stützkörpers (26) an dem Querträger (15) durch Festspannbolzen (41) befestigt sind.

4. Vordere Karosseriestruktur nach einem der Ansprüche 1 bis 3, bei welcher ein oberer Teil des Schwergewichtkörpers (24, 24A, 24B) an dem Querträger (22) durch Stützen (28) befestigt ist.

5. Vordere Karosseriestruktur nach Anspruch 1, bei welcher erste und zweite Stützkörper (128) vorgesehen und mit unteren Endteilen des Querträgers (125) verbunden sind.

6. Vordere Karosseriestruktur nach Anspruch 5, bei welcher die ersten und zweiten Stützkörper (128) jeweils einen oberen Wandteil (128a) für ein Tragen eines unteren Teils des Schwergewichtkörpers (129), einen vertikalen Wandteil (128b), der von einem vorderen Ende des oberen Wandteils (128a) nach unten verläuft und mit einem benachbarten Querträger (125) verbunden ist, und einen Stützteil (128c) aufweisen, der nach vorne von einem unteren Ende des vertikalen Wandteils (128b) vorsteht und einen zweiten Schwergewichtkörper (130) trägt.

7. Vorder Karosseriestruktur nach einem der Ansprüche 1 bis 6, bei welcher der Querträger (125) einen Montageteil (125a) für eine vorübergehende Montage einer Stoßstange (135) des Fahrzeugaufbaus (2) aufweist.

## Revendications

1. Construction de carrosserie avant d'un véhicule, comprenant une unité avant (3; 121) à au moins un élément lourd (24, 24A, 24B; 129) et une unité de base (6; 123), comprenant une enveloppe supérieure (22; 126) qui s'étend en travers du véhicule et qui est fixée aux éléments de châssis avant droits et gauches (13; 139), qui sont raccordés à des couvres-roues voisins (12) à des plaques de renfort des couvres-roues (14) aux parties supérieures à former une construction de section couverte, ladite enveloppe supérieure (22; 126) étant reliée à une partie d'extrémité supérieure d'une panneau d'enveloppe (21; 125) par ses deux parties d'extrémité, qui sont fixées auxdites plaques de renfort des couvres-roues (14), ainsi qu'un élément d'appui (26; 128), qui constitue un élément de la partie avant (3; 121) à supporter ledit au moins un élément lourd (24, 24A, 25B; 129) sur l'unité avant, lequel élément d'appui s'étend en travers du véhicule entre les parties d'extrémité inférieures (23a) dudit panneau d'enveloppe (21; 125),
**caractérisée en ce** que ledit élément d'appui (26; 128) est fixé à et monté, en partie, sur une surface supérieure ou de couverture d'un élément de traverse (15; 138), qui s'étend en travers du véhicule et qui est monté sur lesdits éléments de châssis avant droits et gauches (13; 139).

2. Construction de carrosserie avant selon la revendication 1, dans laquelle ledit élément d'appui (26) à une forme en L et comprend un élément de paroi supérieur (26A) à supporter ledit élément lourd (24, 24A, 24B) et un élément de paroi verticale (26B), qui s'étend en bas à partie d'une extrémité avant dudit élément de paroi supérieur (26A).

3. Construction de carrosserie avant selon la revendication 1 ou la revendication 2, dans laquelle l'élément de partie supérieure (26A) et ledit élément de paroi vertical (26B) dudit élément d'appui (26) sont fixés audit élément de traverse (15), en serrant des boulons (41).

4. Construction de carrosserie avant selon une quelconque des revendications 1 à 3, dans laquelle une partie supérieure dudit élément lourd (24, 24A, 24B) s'appuie sur ladite enveloppe supérieure (22) moyennant des équerres d'appui (28).

5. Construction de carrosserie avant selon la revendication 1, dans laquelle l'unité avant des premiers et deuxièmes éléments d'appui (128) sont prévus et reliés à des parties d'extrémité inférieures de ladite enveloppe supérieure (125).

6. Construction de carrosserie avant selon la revendication 5, dans laquelle chacun desdits premiers et deuxièmes éléments d'appui (128) comprend un élément de paroi supérieur (128a) à appuyer une partie inférieure dudit élément lourd (129), un élément de paroi vertical (128b) qui s'étend en bas, à partir d'une extrémité avant dudit élément de paroi supérieur (128a) et qui est relié à un panneau d'enveloppe (125), ainsi qu'un élément d'appui (128c), qui fait saillie en avant d'une extrémité inférieure dudit élément de paroi vertical (128b) et qui supporte un deuxième élément lourd (130).

7. Construction de carrosserie avant selon une quelconque des revendications 1 à 6, dans laquelle ledit panneau d'enveloppe (125) comprend une partie de montage (125a) pour le montage transitoire d'un pare-chocs (135) du châssis du véhicule (2).
